# EUROPÄISCHE PATENTSCHRIFT

(11) **EP 4 341 074 B1**
(45) Veröffentlichungstag und Bekanntmachung des Hinweises auf die Patenterteilung: **01.10.2025**
(21) Anmeldenummer: 22727816.5
(22) Anmeldetag: 04.05.2022
(51) Int. Cl.: B29C 65/74, B29C 65/02, B29C 65/18, B65B 1/06, B65B 1/32, B65B 9/20, B65B 9/207, B65B 39/00, B65B 51/30

(54) **VERFAHREN ZUM BETRIEB EINER SCHLAUCHBEUTELMASCHINE**
METHOD FOR OPERATING A FLOW-WRAPPING MACHINE
PROCÉDÉ POUR FAIRE FONCTIONNER UNE ENSACHEUSE SOUDEUSE

(30) Priorität: 18.05.2021 DE 102021112794
(43) Veröffentlichungstag der Anmeldung: 27.03.2024
(73) Patentinhaber: Rovema GmbH, 35463 Fernwald (DE)
(72) Erfinder: RINN, Markus, 35415 Pohlheim (DE)
(74) Vertreter: advotec.
(86) Internationale Anmeldenummer: PCT/EP2022/061918
(87) Internationale Veröffentlichungsnummer: WO 2022/243033

(56) Entgegenhaltungen:
- DE-A1- 102011 006 506
- DE-A1- 102017 121 572
- DE-A1- 19 620 560
- DE-A1- 3 435 948
- JP-A- 2011 207 056
- US-A1- 2015 047 296
- US-A1- 2015 298 391

## Beschreibung

Die Erfindung betrifft ein Verfahren zum Betrieb einer Schlauchbeutelmaschine nach Anspruch 1. Gattungsgemäße Schlauchbeutelmaschinen sind beispielsweise aus der DE 10 2010 028 697 A1, der DE 102017 121572 A1 oder der DE 196 20 560 A1 bekannt. Bei der Schlauchbeutelmaschine kann es sich um eine vertikal oder horizontal arbeitende Schlauchbeutelmaschine handeln, sodass die Schlauchbeutel entweder vertikal oder horizontal durch die Schlauchbeutelmaschine gefördert werden.

Zur Herstellung von Schlauchbeuteln sind unterschiedlichste Folienmaterialien bekannt. Im Hinblick auf eine einfache Verarbeitung sind insbesondere Kunststofffolien zur Herstellung von Schlauchbeuteln weit verbreitet. Bei diesen Kunststofffolien kann es sich insbesondere auch um Mehrschichtfolien handeln, bei denen die unterschiedlichen Schichten des Folienmaterials im Hinblick auf die Verarbeitung, dabei insbesondere im Hinblick auf die Siegelung der Folienbahn, optimiert sind. Derartige Kunststofffolien weisen üblicherweise eine hohe Rissfestigkeit auf und können dadurch auch bei hohen Fertigungsgeschwindigkeiten problemlos in der Schlauchbeutelmaschine verarbeitet werden.

Um einen schonenden Ressourcenverbrauch zu ermöglichen, finden zunehmend Folienmaterialien zur Herstellung von Schlauchbeuteln Verwendung, die einen nachhaltigen und ressourcenschonenden Materialeinsatz ermöglichen. Insbesondere werden zunehmend Folienmaterialien zur Herstellung von Schlauchbeuteln eingesetzt, die einen hohen Papieranteil aufweisen. Dieses Papiermaterial hat insbesondere den Vorteil, dass es mit bekannten Wiederverwertungssystemen, beispielsweise unter Verwendung von Papiertonnen, mit einem hohen Wiederverwendungsanteil recycliert werden kann.

Nachteilig an diesen nachhaltigen Folienmaterialien ist es, dass diese eine erheblich geringere Rissfestigkeit aufweisen. Diese geringere Rissfestigkeit des Folienmaterials erfordert es, dass beim Anfahren bzw. beim Abstoppen der Schlauchbeutelmaschine eine positive bzw. negative Beschleunigungsphase durchfahren werden muss, bei der die Schlauchbeutelmaschinen von einer Anfangsgeschwindigkeit, beispielsweise vom Stand, auf die gewünschte Sollgeschwindigkeit beschleunigt bzw. von der Sollgeschwindigkeit auf eine Endgeschwindigkeit, beispielsweise den Stand, abgebremst wird. Durch diese positive bzw. negative Beschleunigungsphase kann die mechanische Belastung der Folienbahn auf ein Maß begrenzt werden, das ein Einreißen der Folienbahn zuverlässig ausschließt. Die relativ lange Beschleunigungsphase beim Anfahren bzw. Abbremsen der Schlauchbeutelmaschine führt allerdings dazu, dass die Schlauchbeutel während der positiven bzw. negativen Beschleunigungsphase nicht die notwendige Siegelqualität aufweisen. Dies ist insbesondere dann von großem Nachteil, wenn die Beschleunigungsphase relativ lang ist, sodass eine relativ große Anzahl von Schlauchbeuteln als Ausschuss produziert wird. In DE 196 20 560 A1 und DE 10 2017 121572 A1 wird der Energieeintrag in die Siegelzone in Abhängigkeit von der aktuellen Fördergeschwindigkeit der Folienbahn variiert. Die DE 196 20 560 A1 offenbart dabei jedoch keine geschwindigkeitsabhängige Veränderung des Siegelwegs, entlang dessen die Querbacken mit der Folienbahn in Kontakt sind. Die DE 10 2017 121572 A1 offenbart keinen Folienabzug im Sinne der vorliegenden Anmeldung.

Ausgehend von diesem Stand der Technik ist es deshalb Aufgabe der vorliegenden Erfindung, ein neues Verfahren zum Betrieb einer Schlauchbeutelmaschine vorzuschlagen, das die Herstellung von Schlauchbeuteln mit einer ausreichenden Siegelqualität auch während der positiven bzw. negativen Beschleunigungsphase ermöglicht.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass in der positiven bzw. negativen Beschleunigungsphase zumindest der Siegelweg als ein Siegelparameter der Querbacken zum Erzeugen von Quernähten in Abhängigkeit von der aktuellen Fördergeschwindigkeit der Folienbahn verändert wird. Denn die sich ändernde Fördergeschwindigkeit der Folienbahn während der positiven bzw. negativen Beschleunigungsphase bewirkt eine unerwünschte Beeinflussung der Siegelparameter, sodass die Siegelqualität nur durch entsprechende Änderung der Siegelparameter während der Beschleunigungsphase erhalten werden kann.

Die Siegelqualität der Quersiegelnähte wird durch eine Vielzahl von Parametern beeinflusst. Von besonderer Bedeutung für die Siegelqualität ist die Siegelzeit, während der die Querbacken mit der Siegelbahn in Kontakt sind. Weist die Folienbahn während der positiven bzw. negativen Beschleunigungsphase eine erheblich geringere Geschwindigkeit als die Sollgeschwindigkeit auf, so kann sich dadurch bei gleichbleibender Bewegungskinematik der Quersiegelbacken eine unerwünschte Erhöhung der Siegelzeit ergeben, durch die die Siegelzone verbrennt und dadurch eine ungenügende Siegelqualität aufweist.

Additiv zur Siegelzeit wird erfindungsgemäß auch der Siegelweg, entlang dessen die Querbacken mit der Siegelbahn in Kontakt sind, in Abhängigkeit von der aktuellen Fördergeschwindigkeit der Folienbahn verändert werden. Bewegt sich die Folienbahn mit hoher Geschwindigkeit, insbesondere mit entsprechend der vorgegebenen Taktzeit gewünschter Sollgeschwindigkeit, ist ein entsprechend langer Siegelweg erforderlich, um die notwendige Wärme durch die Querbacken in die Siegelzone des Folienmaterials einzutragen. Weist die Folienbahn eine geringe Fördergeschwindigkeit auf, wie es insbesondere in der positiven bzw. neu negativen Beschleunigungsphase der Fall ist, muss der Siegelweg entsprechend verkürzt werden, um einen zu hohen Wärmeeintrag der Querbacken in die Siegelzone zu vermeiden. Alternativ bzw. additiv zur Siegelzeit und additiv zum Siegelweg kann auch die Siegeltemperatur, mit der die Folienbahn von den Querbacken gesiegelt wird, in Abhängigkeit von der aktuellen Fördergeschwindigkeit der Folienbahn verändert werden. Wiederum kann dadurch der Wärmeeintrag der Querbacken in das Folienmaterial in Abhängigkeit von der Geschwindigkeit der Folienbahn so variiert werden, dass ein Verbrennen des Folienmaterials verhindert wird. Weiterhin ist es auch möglich, den Siegeldruck, mit dem die Folienbahn von den Querbacken gesiegelt wird, in Abhängigkeit von der aktuellen Fördergeschwindigkeit der Folienbahn zu verändern.

Zur Erlangung einer ausreichenden Siegelqualität in der Quersiegelnaht gibt der Folienhersteller in der Regel optimierte Siegelparameter vor, von denen nur innerhalb einer relativ geringen Toleranz abgewichen werden kann. Um die Siegelqualität auch beim Anfahren bzw. Abbremsen der Schlauchbeutelmaschine jederzeit zu gewährleisten, ist es insofern besonders vorteilhaft, wenn zumindest ein Siegelparameter der Querbacken zum Erzeugen von Quernähten in Abhängigkeit von der aktuellen Fördergeschwindigkeit der Folienbahn derart verändert wird, dass der Energieeintrag der Querbacken in die Quernähte im Wesentlichen konstant bleibt. Wird also beispielsweise die Fördergeschwindigkeit der Folienbahn verringert, muss auch der Siegelweg der Querbacken beim Quersiegeln verkürzt werden, da ansonsten bei gleichbleibendem Siegelweg eine zu hohe Wärmemenge in die Siegelzone eingetragen wird.

Eine besonders einfache Verfahrensvariante ergibt sich, wenn der Siegeldruck und/oder die Siegeltemperatur in der positiven bzw. negativen Beschleunigungsphase unverändert bleiben. Denn diese Siegelparameter können bei bekannten Schlauchbeutelmaschinen nur mit relativ hohem Aufwand verändert werden. Um den Wärmeeintrag in die Siegelzone während der Beschleunigungsphasen weitgehend konstant zu halten, ist es dagegen besonders einfach, den Siegelweg in Abhängigkeit von der aktuellen Fördergeschwindigkeit der Folienbahn so zu verändern, dass die effektive Siegelzeit im Wesentlichen konstant bleibt. Insbesondere kann der Siegelweg in linearer Abhängigkeit von der aktuellen Fördergeschwindigkeit der Folienbahn verändert werden. Das heißt beispielsweise, bei doppelter Fördergeschwindigkeit wird der Siegelweg auf die doppelte Länge verlängert.

Einen besonders großen Vorteil bildet das erfindungsgemäße Verfahren bei der kontinuierlichen Herstellung von Schlauchbeuteln. Insbesondere kann mit dem erfindungsgemäßen Verfahren eine Folienbahn mit einem hohen Anteil von Papier verarbeitet werden, obwohl diese Papierfolien eine geringe Rissfestigkeit aufweisen und innerhalb eines Parameterfensters optimal gesiegelt werden können. Insbesondere ermöglicht das erfindungsgemäße Verfahren die problemlose Verarbeitung von Folienbahnen mit einem Anteil von mindestens 95 % Papier.

Eine Ausführungsform der Erfindung ist in den Zeichnungen schematisiert dargestellt und wird nachfolgend beispielhaft erläutert.

Es zeigen:
- **Fig. 1**: eine schematisiert dargestellte Schlauchbeutelmaschine bei Durchführung des erfindungsgemäßen Verfahrens im Querschnitt;

- **Fig. 2**: vier verschiedene Siegelparameter zur Quersiegelung der Schlauchbeutel in der Schlauchbeutelmaschine gemäß Fig. 1 bei Durchführung des erfindungsgemäßen Verfahrens.

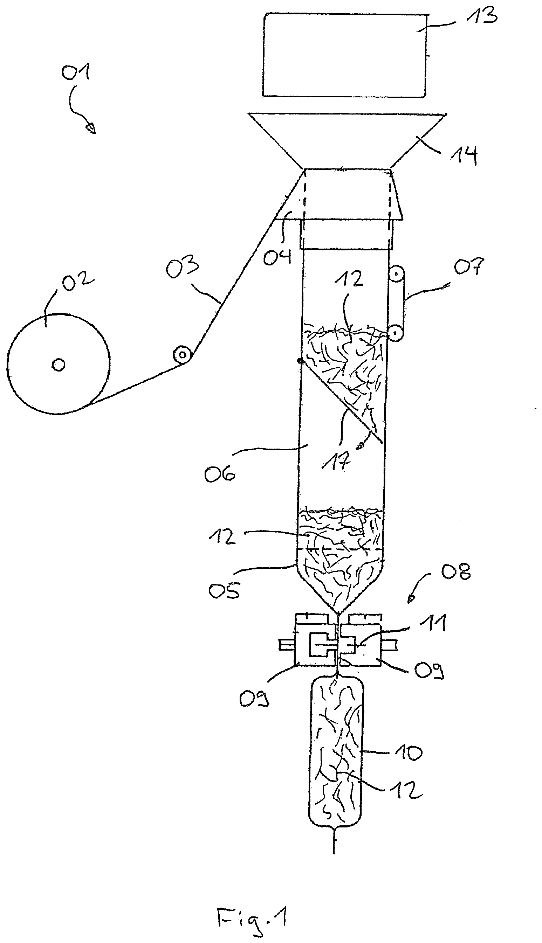

**Fig. 1** zeigt eine schematisiert dargestellte Schlauchbeutelmaschine 01, wobei in **Fig. 1** nur die Teile der Schlauchbeutelmaschine 01 dargestellt sind, die für das Verständnis der Erfindung erforderlich sind. Von einer Vorratsrolle 02 wird eine Folienbahn 03 abgewickelt und anschließend an einer Formschulter 04 zu einem Folienschlauch 05 geformt. Bei der Folienbahn 03 handelt es sich um eine mit einer Siegelschicht beschichtete Papierbahn, wobei der Papieranteil höher als 95 % ist.

Der Folienschlauch 05 gleitet an der Außenseite eines Formatrohrs 06 angetrieben von einem Folienabzug 07 nach unten, wobei der Folienschlauch 05 mittels einer in **Fig. 1** nicht dargestellten Längssiegeleinrichtung parallel zu seiner Transportrichtung längsgesiegelt wird. Die Fördergeschwindigkeit der Folienbahn 03 wird mit einer entsprechenden Sensorik überwacht.

Unterhalb des Formatrohrs 06 befindet sich eine Quersiegeleinrichtung 08 mit zwei Querbacken 09 zur Erzeugung von Quernähten, durch die der Folienschlauch 05 in einzelne Schlauchbeutel 10 querverschweißt wird. In die Querbacke 09 ist eine Trenneinrichtung 11 integriert, mit der die einzelnen Schlauchbeutel 10 nach dem Querschweißen voneinander getrennt werden können.

Das Füllgut 12 zur Befüllung der Schlauchbeutel 10 wird mit einer Messeinrichtung, beispielsweise einer Waage 13, so ausgemessen, dass jeweils die für einen Schlauchbeutel 10 vorgesehene Füllmenge erreicht wird. Das ausgemessene Füllgut 12 fällt durch einen Öffnungsimpuls der Waage 13 in den darunterliegenden Trichter 14. Durch den Trichter 14 wird das Füllgut 12 auf den Durchmesser des Formatrohrs 06 zusammengeführt.

Die Herstellung der Schlauchbeutel 10 in der Schlauchbeutelmaschine 01 erfolgt kontinuierlich und mit einer hohen Taktzahl, das bedeutet mit einer sehr hohen Sollgeschwindigkeit. Beim Anfahren bzw. Abbremsen der Schlauchbeutelmaschine 01 muss also die Folienbahn 03 zunächst aus dem Stand stark beschleunigt bzw. stark abgebremst werden. Um ein Reißen der Folienbahn 03 zu verhindern, muss die Beschleunigung bzw. das Abbremsen dabei auf ein Höchstmaß begrenzt werden, um die beim Beschleunigen bzw. Abbremsen auftretenden Kräfte unterhalb eines tolerierbaren Maßes zu halten. Dies führt zu einer relativ langen positiven bzw. negativen Beschleunigungsphase.

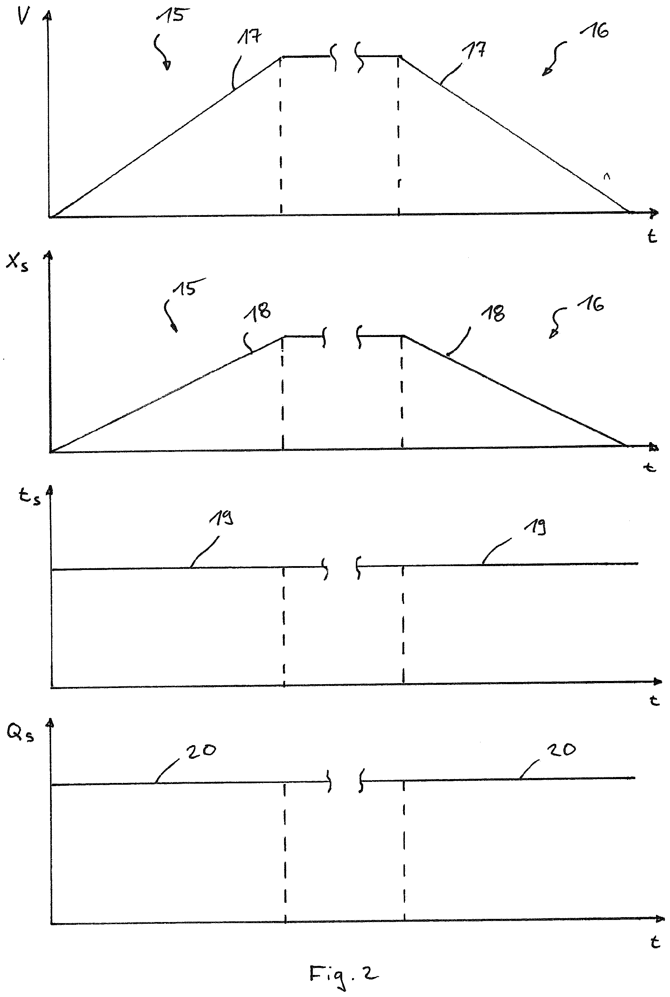

In **Fig. 2** sind vier Prozessparameter der Schlauchbeutelmaschine 01 während der positiven bzw. negativen Beschleunigungsphase 15 und 16 schematisiert dargestellt. Als Prozessparameter werden dabei in der Reihenfolge von oben die Fördergeschwindigkeit 17 (V) der Folienbahn 03, der Siegelweg 18 (X_{S}) der Querbacken 09, die Siegelzeit 19 (T_{S}) und die in die Folienbahn 03 beim Quersiegeln eingetragene Wärmemenge 20 (Q_{S}) dargestellt.

Im obersten Diagramm von **Fig. 1****,** das die Fördergeschwindigkeit 17 der Folienbahn 03 darstellt, erkennt man, dass die Fördergeschwindigkeit 17 in der positiven Beschleunigungsphase 15 aus dem Stand auf die vorgegebene Sollgeschwindigkeit entlang einer linearen Rampe beschleunigt wird. Umgekehrt wird dann in der negativen Beschleunigungsphase 16 die Fördergeschwindigkeit 17 der Folienbahn 03 von der Sollgeschwindigkeit entlang einer linearen Rampe zum Stand hin abgebremst.

In dem darunterliegenden zweiten Diagramm ist der Siegelweg 18 in der positiven Beschleunigungsphase 15 bzw. der negativen Beschleunigungsphase 16 schematisiert dargestellt. Man erkennt, dass der Siegelweg 18 in linearer Abhängigkeit zur Fördergeschwindigkeit 17 der Folienbahn 03 während der positiven Beschleunigungsphase 15 erhöht bzw. in der negativen Beschleunigungsphase 16 verringert wird. Durch diese Verkürzung bzw. Verlängerung des Siegelweges 18 während der positiven Beschleunigungsphase 15 bzw. während der negativen Beschleunigungsphase 16 wird erreicht, dass die in dem dritten Diagramm schematisiert eingetragene Siegelzeit 19 auch während der beiden Beschleunigungsphasen 15 bzw. 16 im Wesentlichen konstant bleibt. Durch diese im Wesentlichen konstante Siegelzeit 19, während der die Siegelbacken 09 bei konstanter Siegeltemperatur und konstantem Siegeldruck mit der Folienbahn 03 in Kontakt sind, wird, wie in dem vierten Diagramm schematisiert dargestellt, die während der Siegelung der Folienbahn 03 eingetragene Siegelwärme 20 im Wesentlichen konstant gehalten.

## Patentansprüche

1. Verfahren zum Betrieb einer Schlauchbeutelmaschine (01) mit einer von einer Vorratsrolle (02) abwickelbaren Folienbahn (03), einer Formschulter (04) zum Umformen der Folienbahn (03) zu einem Folienschlauch (05), einem gegen den Folienschlauch (05) wirkenden Folienabzug (07) zum Weiterbewegen des Folienschlauches (05), einer Längssiegeleinrichtung zum Verschweißen des Folienschlauches (05) parallel zu seiner Transportrichtung mittels einer Längsnaht, einer Quersiegeleinrichtung (08) mit gegeneinander bewegbaren, den Folienschlauch (05) quer zur Transportrichtung verschweißenden Querbacken (09) zum Erzeugen von Quernähten, einer Trenneinrichtung (11) zum Abtrennen fertiggestellter Schlauchbeutel (10) vom Folienschlauch (05), wobei die Schlauchbeutelmaschine (01) beim Anfahren in einer positiven Beschleunigungsphase (15) von einer Anfangsgeschwindigkeit auf eine Sollgeschwindigkeit beschleunigt wird oder zum Stoppen in einer negativen Beschleunigungsphase (16) von der Sollgeschwindigkeit auf eine Endgeschwindigkeit abgebremst wird,
wobei in der positiven Beschleunigungsphase (15) und/oder in der negativen Beschleunigungsphase (16) zumindest ein Siegelparameter (18, 19, 20) der Querbacken (09) zum Erzeugen von Schlauchbeuteln (10) in Abhängigkeit von der aktuellen Fördergeschwindigkeit (17) der Folienbahn (03) verändert wird,
wobei der Siegelweg (18), entlang dessen die Querbacken (09) mit der Folienbahn (03) in Kontakt sind, in Abhängigkeit von der aktuellen Fördergeschwindigkeit (17) der Folienbahn (03) verändert wird.

2. Verfahren nach Anspruch 1,
**dadurch gekennzeichnet,**
**dass** die Siegelzeit (19), während der die Querbacken (09) mit der Folienbahn (03) in Kontakt sind, in Abhängigkeit von der aktuellen Fördergeschwindigkeit (17) der Folienbahn (03) verändert wird.

3. Verfahren nach Anspruch 1,
**dadurch gekennzeichnet,**
**dass** die Siegeltemperatur, mit der die Folienbahn (03) von den Querbacken (09) gesiegelt wird, in Abhängigkeit von der aktuellen Fördergeschwindigkeit (17) der Folienbahn (03) verändert wird.

4. Verfahren nach Anspruch 1,
**dadurch gekennzeichnet,**
**dass** der Siegeldruck, mit dem die Folienbahn (03) von den Querbacken (09) gesiegelt wird, in Abhängigkeit von der aktuellen Fördergeschwindigkeit (17) der Folienbahn (03) verändert wird.

5. Verfahren nach einem der Ansprüche 1 bis 4,
**dadurch gekennzeichnet,**
**dass** zumindest ein Siegelparameter (18, 19, 20) der Querbacken (09) zum Erzeugen von Quernähten in Abhängigkeit von der aktuellen Fördergeschwindigkeit (17) der Folienbahn (03) derart verändert wird, dass die Siegelwärme (20) der Querbacken (09) in die Quernähte konstant bleibt.

6. Verfahren nach einem der Ansprüche 1 bis 5,
**dadurch gekennzeichnet,**
**dass** der Siegeldruck und/oder die Siegeltemperatur (19) in der positiven oder negativen Beschleunigungsphase (15, 16) unverändert bleibt, wobei der Siegelweg (18) in Abhängigkeit von der aktuellen Fördergeschwindigkeit (17) der Folienbahn (03) derart verändert wird, dass die Siegelzeit konstant bleibt.

7. Verfahren nach einem der Ansprüche 1 bis 6,
**dadurch gekennzeichnet,**
**dass** der Siegelweg (18) in linearer Abhängigkeit von der aktuellen Fördergeschwindigkeit (17) der Folienbahn (03) verändert wird.

8. Verfahren nach einem der Ansprüche 1 bis 7,
**dadurch gekennzeichnet,**
**dass** die Schlauchbeutelmaschine (01) bei Herstellung der Schlauchbeutel (10) kontinuierlich angetrieben wird.

9. Verfahren nach einem der Ansprüche 1 bis 8
**dadurch gekennzeichnet,**
**dass** die Folienbahn (03) einen hohen Anteil von Papier enthält.

## Claims

1. A method for operating a tubular bag machine (01) comprising a film web (03) which is capable of being unwound from a supply reel (02), a forming shoulder (04) for forming the film web (03) into a film tube (05), a film take-off unit (07) acting against the film tube (05) and serving to move the film tube (05) further, a longitudinal sealing device for welding shut the film tube (05) parallel to its transport direction by means of a longitudinal seam, a transverse sealing device (08) which has transverse jaws (09) movable against one another and welding shut the film tube (05) transversely to the transport direction for producing transverse seams, a separating element (11) for separating finished tubular bags (10) from the film tube (05), the tubular bag machine (01) being accelerated in a positive acceleration phase (15) from an initial speed to a target speed when starting or being decelerated in a negative acceleration phase (16) from the target speed to a final speed for stopping,
wherein, in the positive acceleration phase (15) and/or in the negative acceleration phase (16), at least one sealing parameter (18, 19, 20) of the transverse jaws (09) for producing tubular bags (10) is changed as a function of the current conveying speed (17) of the film web (03), wherein the sealing path (18) along which the transverse jaws (09) are in contact with the film web (03) is changed as a function of the current conveying speed (17) of the film web (03).

2. The method according to claim 1,
**characterized in that**
the sealing time (19) during which the transverse jaws (09) are in contact with the film web (03) is changed as a function of the current conveying speed (17) of the film web (03).

3. The method according to claim 1,
**characterized in that**
the sealing temperature with which the film web (03) is sealed by the transverse jaws (09) is changed as a function of the current conveying speed (17) of the film web (03).

4. The method according to claim 1,
**characterized in that**
the sealing pressure with which the film web (03) is sealed by the transverse jaws (09) is changed as a function of the current conveying speed (17) of the film web (03).

5. The method according to any one of claims 1 to 4,
**characterized in that**
at least one sealing parameter (18, 19, 20) of the transverse jaws (09) for producing transverse seams is changed as a function of the current conveying speed (17) of the film web (03) in such a manner that the sealing heat (20) of the transverse jaws (09) into the transverse seams remains constant.

6. The method according to any one of claims 1 to 5,
**characterized in that**
the sealing pressure and/or the sealing temperature (19) remain unchanged in the positive or negative acceleration phase (15, 16), the sealing path (18) being changed as a function of the current conveying speed (17) of the film web (03) in such a manner that the sealing time remains constant.

7. The method according to any one of claims 1 to 6,
**characterized in that**
the sealing path (18) is changed in linear dependence on the current conveying speed (17) of the film web (03).

8. The method according to any one of claims 1 to 7,
**characterized in that**
the tubular bag machine (01) is continuously driven during the production of the tubular bags (10).

9. The method according to any one of claims 1 to 8,
**characterized in that**
the film web (03) contains a high proportion of paper.

## Revendications

1. Procédé pour le fonctionnement d'une machine (01) de sachet tubulaire comprenant une bande de film (03) capable d'être déroulée d'un rouleau d'alimentation (02), un épaulement de formage (04) pour former la bande de film (03) en un tube de film (05), une unité (07) de tirage de film agissant contre le tube de film (05) et servant à faire avancer le tube de film (05), un dispositif de scellage longitudinal pour souder le tube de film (05) parallèlement à sa direction de transport au moyen d'une soudure longitudinale, un dispositif de scellage transversal (08) ayant des mâchoires transversales (09) déplaçables l'une contre l'autre et soudant le tube de film (05) transversalement à la direction de transport pour produire des soudures transversales, un dispositif de séparation (11) pour séparer des sachets tubulaires (10) finis du tube de film (05), dans lequel la machine (01) de sachet tubulaire est accélérée d'une vitesse initiale à une vitesse cible dans une phase d'accélération (15) positive lors du démarrage ou ralentie de la vitesse cible à une vitesse finale dans une phase d'accélération (16) négative pour l'arrêt,
dans lequel au moins un paramètre de scellage (18, 19, 20) des mâchoires transversales (09) est changé pour produire des sachets tubulaires (10) en fonction de la vitesse de convoyage (17) actuelle de la bande de film (03) dans la phase d'accélération (15) positive et/ou la phase d'accélération (16) négative,
dans lequel le trajet de scellage (18) le long duquel les mâchoires transversales (09) sont en contact avec la bande de film (03) est changé en fonction de la vitesse de convoyage (17) actuelle de la bande de film (03).

2. Procédé selon la revendication 1,
**caractérisé en ce que**
le temps de scellage (19) pendant lequel les mâchoires transversales (09) sont en contact avec la bande de film (03) est changé en fonction de la vitesse de convoyage (17) actuelle de la bande de film (03).

3. Procédé selon la revendication 1,
**caractérisé en ce que**
la température de scellage avec laquelle la bande de film (03) est scellée par les mâchoires transversales (09) est changée en fonction de la vitesse de convoyage (17) actuelle de la bande de film (03).

4. Procédé selon la revendication 1,
**caractérisé en ce que**
la pression de scellage avec laquelle la bande de film (03) est scellée par les mâchoires transversales (09) est changée en fonction de la vitesse de convoyage (17) actuelle de la bande de film (03).

5. Procédé selon l'une quelconque des revendications 1 à 4, **caractérisé en ce**
**qu'**au moins un paramètre de scellage (18, 19, 20) des mâchoires transversales (09) pour produire des soudures transversales est changé en fonction de la vitesse de convoyage (17) actuelle de la bande de film (03) de telle manière que la chaleur de scellage (20) des mâchoires transversales (09) dans les soudures transversales reste constante.

6. Procédé selon l'une quelconque des revendications 1 à 5, **caractérisé en ce que**
la pression de scellage et/ou la température de scellage (19) restent inchangées dans la phase d'accélération (15, 16) positive ou négative, dans lequel le trajet de scellage (18) est changé en fonction de la vitesse de convoyage (17) actuelle de la bande de film (03) de telle manière que le temps de scellage reste constant.

7. Procédé selon l'une quelconque des revendications 1 à 6, **caractérisé en ce que**
le trajet de scellage (18) est changé en dépendance linéaire de la vitesse de convoyage (17) actuelle de la bande de film (03).

8. Procédé selon l'une quelconque des revendications 1 à 7, **caractérisé en ce que**
la machine (01) de sachet tubulaire est entraînée en continu lors de la production des sachets tubulaires.

9. Procédé selon l'une quelconque des revendications 1 à 8, **caractérisé en ce que**
la bande de film (03) contient une proportion élevée de papier.
